(19) Europäisches Patentamt
European Patent Office
Office européen des brevets

(11) **EP 2 360 120 A1**

(12) **EUROPÄISCHE PATENTANMELDUNG**

(43) Veröffentlichungstag:
**24.08.2011 Patentblatt 2011/34**

(21) Anmeldenummer: **10197057.2**

(22) Anmeldetag: **27.12.2010**

(51) Int Cl.:
*C01B 33/141* (2006.01)      *C09C 1/30* (2006.01)
*C01B 33/193* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **22.01.2010   DE 102010001135**

(71) Anmelder: **Evonik Degussa GmbH**
**45128 Essen (DE)**

(72) Erfinder:
• **Zschunke, Florian**
  **60435 Frankfurt am Main (DE)**
• **Standke, Burkhard**
  **79540 Lörrach (DE)**

• **Scharfe, Stefan**
  **63526 Erlensee (DE)**
• **Batz-Sohn, Christoph**
  **63454 Hanau-Mittelbuchen (DE)**
• **Lach, Heinz**
  **63517 Rodenbach (DE)**
• **Heuschen, Andrea**
  **63639 Flörsbachtal (DE)**
• **Behnisch, Jürgen**
  **53359 Rheinbach (DE)**
• **Ruf, Markus**
  **53347 Alfter-Witterschlick (DE)**
• **Stein, Günter**
  **61130 Nidderau 4 (DE)**
• **Banert, Tobias**
  **63450 Hanau (DE)**

(54)   **Stabile wässrige Dispersionen aus gefällter Kieselsäure**

(57)   Die Erfindung betrifft stabilisierte Dispersionen von gefälltem Siliciumdioxid, ein Verfahren zu deren Herstellung sowie deren Verwendung, insbesondere zur Herstellung von Papierstrichen für glänzendes Photopapier für den Tintenstrahldruck.

EP 2 360 120 A1

**Beschreibung**

Die vorliegende Erfindung betrifft stabilisierte Dispersionen von gefällter Kieselsäure, ein Verfahren zu deren Herstellung sowie deren Verwendung, insbesondere zur Herstellung von Papierstrichen für glänzendes Photopapier für den Tintenstrahldruck.

Dispersionen auf Basis von gefälltem Siliciumdioxid wurden bereits im Stand der Technik beschrieben. Ein Kernthema der Publikationen des Standes der Technik ist die Stabilisierung der Dispersionen.

So beschreibt zum Beispiel die JP-OS-09142827 stabile Kieselsäuredispersionen, deren Lagerstabilität dadurch erreicht wird, dass die mittlere Partikelgröße der Kieselsäurepartikel weniger als 100 nm beträgt. Diese Dispersionen haben den Nachteil, dass es sehr aufwändig und energieintensiv ist, Kieselsäurepartikel zu solch kleinen Partikelgrößen zu vermahlen. Das in der JP0914287 beschriebene Verfahren dürfte somit unter ökonomischen Gesichtspunkten keine technologische Relevanz erlangen.

In der EP 0368722, der EP 0329509, der EP 0886628 und der EP 0435936 werden mittels Stabilisatoren stabilisierte Dispersionen von Kieselsäuren beschrieben. Die Stabilisatoren werden unter anderem zugesetzt, um die Sedimentation der Partikel zu vermeiden. Bei den Stabilisatoren handelt es sich beispielsweise um Biogummi oder um ein System aus Aluminiumverbindungen und anionischen Dispergiermitteln oder um Latex oder um fein zerteilte Festkörper, die chemisch und physikalisch mit dem Siliciumdioxid verträglich sind. Der Einsatz solcher Stabilisatoren ist sowohl aus Kostengründen als auch im Hinblick auf die spätere Verwendung der Dispersionen nachteilig. Insbesondere sind solche Dispersionen nicht zur Herstellung von Topcoats für Hochglanzphotopapier für den Tintenstrahldruck geeignet.

Ein anderer Ansatz zur Stabilisierung von Siliciumdioxiddispersionen wird in der DE102006049526.8 vorgestellt. Dort werden Dispersionen aus gefällter Kieselsäure beschrieben welche auf Grund eines alkalischen pH-Wertes und eines stark negativen Zetapotentials lagerstabil sind. Es handelt sich hierbei also um anionisch stabilisierte Dispersionen. Diese Dispersionen eignen sich jedoch nicht zur Herstellung von Topcoats für Hochglanzphotopapier für den Tintenstrahldruck, da die gewöhnlich anionischen Farbstoffe auf einem kationischen porösen Druckträger fixiert werden müssen um u.a. Wasserfestigkeit und hohe Brillanz zu erreichen.

Kationisch stabilisierte Dispersionen sind ebenfalls bereits bekannt. So beschreibt die DE-A-10033054 die Stabilisierung einer Silicadispersion mit Hilfe von kationischen organischen Polymeren. Die US-A-6777039 beschreibt die Herstellung einer Beschichtung für ein Tintenstrahldruckmedium durch Zugabe einer wässrigen Lösung von Polyvinylalkohol, einem organischen Lösungsmittel und einem Tensid zu einer Dispersion aus Silica und einem kationischen Polymer. Die US-A-6417264 beschreibt eine Dispersion aus Silica, das mit einem organischen kationischen Polymer in einem polaren Lösungsmittel dispergiert ist. Die US-A-6420039 beschreibt eine kationische Silicadispersion, bei der $SiO_2$-Partikel mit einer Aluminiumverbindung in Verbindung gebracht werden, um eine Stabilisierung zu erreichen.

Die Stabilisierung mit kationischen Polymeren wie z. B. p-DADMAC ist vor allem für Dispersionen von pyrogenen Siliciumdioxiden interessant. Für Dispersionen von gefällten Kieselsäuren hat sich diese Methode jedoch als problematisch herausgestellt, da mehrwertige Anionen aus dem Fällprozeß, z. B. Sulfationen, zur Reagglomeration der dispergierten Kieselsäurepartikel führten. Somit sind die genannten Methoden für die kationische Stabilisierung von Fällungskieselsäuredispersionen nicht hinreichend geeignet.

Einen alternativen Ansatz zur kationischen Stabilisierung von Kieselsäuredispersionen liefert die EP 1 894 888 A1. Dort wird offenbart, dass durch direkte Modifikation von Silica mit Aminosilanen auf einfache Weise hoch stabile Dispersionen mit einem Minimum an zusätzlichen Reagenzien erhalten werden konnten. Die nach diesem Verfahren erhältlichen Dispersionen weisen jedoch gemäß den Beispielen nur Feststoffgehalte von nur 10 bis 19 Gew. % auf, was für eine kommerzielle Anwendung nicht geeignet erscheint.

Auf Grund der deutlich niedrigeren Herstellkosten von Fällungskieselsäuren im Vergleich zu pyrogenen Kieselsäuren besteht somit nach wie vor ein Bedarf für ein Verfahren welches es erlaubt kostengünstig kationisch stabilisierte Fällungskieselsäuredispersionen mit hohem Feststoffgehalt und guter Lagerstabilität herzustellen. Idealer Weise soll dieses Verfahren die Stabilisierung der Fällungskieselsäuredispersion auch bei Anwesenheit von mehrwertigen Anionen bzw. deutlichen Mengen an anorganischen Salzen in der Dispersion erlauben, so dass es nicht notwendig ist diese Salze/Anionen in aufwendigen Reinigungsschritten vollständig zu entfernen.

Aufgabe der vorliegenden Erfindung war es daher ein Verfahren zur Herstellung von kationisch stabilisierten Fällungskieselsäuredispersionen bereitzustellen, welches zumindest einige der Nachteile der aus dem Stand der Technik bekannten Verfahren nicht aufweist. Eine spezielle Aufgabe der vorliegenden Erfindung war es, ein Verfahren bereitzustellen, welches es erlaubt kationisch stabilisierte Fällungskieselsäuredispersionen in Gegenwart mehrwertige Anionen und/oder signifikanter Mengen an anorganischen Salzen, herzustellen. Eine sehr spezielle Aufgabe war es ein Verfahren zur Herstellung von Fällungskieselsäuredispersionen, enthaltend mehrwertige Anionen, mit hohem Feststoffgehalt, vorzugsweise von mehr als 20 Gew. %, und guter Lagerstabilität bereitzustellen. Insbesondere war es Aufgabe ein Verfahren zur Herstellung von kationisch stabilisierten Fällungskieselsäuredispersionen in Gegenwart von mehrwertigen Anionen herzustellen, welche zu einem Topcoat von glänzendem Inkjetpapier weiterverarbeitet werden können.

Weiterhin war es Aufgabe der vorliegenden Erfindung, neuartige kationisch stabilisierte Fällungskieselsäuredispersionen bereitzustellen, welche zumindest einige der Nachteile der Siliciumdioxiddispersionen des Standes der Technik nicht oder nur in verringertem Maße aufweisen.

Weitere nicht explizit genannte Aufgaben ergeben sich aus dem Gesamtzusammenhang der nachfolgenden Beschreibung, Beispiele und Ansprüche.

Die Erfinder haben überraschend herausgefunden, dass es möglich ist durch Oberflächenmodifikation von Fällungskieselsäurepartikeln mit Aminosilanen in einem geeigneten Verfahren, welches das Herstellen einer Vordispersion und danach das Vermahlen der Vordispersion in einer geeigneten Mühle umfasst, Dispersionen herzustellen, welche hervorragend als Rohdispersion zur Weiterverarbeitung in einen Topcoat für glänzendes Inkjetpapier geeignet sind. Mit dem in den Ansprüchen und der nachfolgenden Beschreibung näher definierten Verfahren ist es gelungen stabile Dispersionen aus gefällten Kieselsäuren auch in Gegenwart von anorganischen Salzen, insbesondere solchen mit mehrwertigen Anionen herzustellen. Somit weist das erfindungsgemäße Verfahren im Gegensatz zu den bekannten Verfahren bei denen kationische Polymere zugesetzt werden den großen Vorteil auf, dass auf eine aufwendige Aufreinigungsstufe zur Entfernung der Salze und/oder mehrwertige Anionen bis in den ppm Bereich verzichtet werden kann. Dies ist ein wesentlicher Schritt um den Markt für Streichfarben für Inkjetmedien - welcher bislang auf Grund der Probleme mit den anorganischen Salzen und mehrwertigen Anionen bei Fällungskieselsäure ausschließlich den pyrogenen Kieselsäuren vorbehalten war - auch für Fällungskieselsäuren zugänglich zu machen. Dies wiederum führt auf Grund der guten Verfügbarkeit und der geringen Herstellungskosten für gefällte Kieselsäuren zu einem erheblichen Kostenvorteil.

Wie zuvor bereits angedeutet können Fällungskieselsäuredispersionen in Gegenwart mehrwertiger Anionen nur unzureichend mit kationischen Polymeren wie z. B. p-DADMAC stabilisiert werden. Die Erfinder haben im Rahmen ihrer Forschungsarbeiten herausgefunden, dass bei der Stabilisierung von Fällungskieselsäuredispersionen mit p-DADMAC in Gegenwart von mehrwertigen Anionen Probleme bei der Vermahlung auftreten, d.h. mit einfachen Mahltechniken wie z. B. Kugelmühlen kann die mittlere Partikelgröße $d_{50}$ der Fällungskieselsäurepartikel in der Dispersion nicht weit genug reduziert werden. Ohne an eine bestimmte Theorie gebunden zu sein, sind die Erfinder der Ansicht, dass dies an den mehrwertigen Anionen, wie z. B. Sulfationen liegt, welche während der Fällung durch das Säuerungsmittel eingetragen werden. Erst wenn diese nahezu vollständig entfernt werden ist eine Stabilisierung mit kationischen Polymeren wie p-DADMAC möglich. Mit dem erfindungsgemäßen Verfahren gelang es diesen zusätzlichen Reinigungsschritt zu sparen und dennoch Partikel mit einer ausreichend kleinen mittleren Partikelgröße zu erzeugen. Diese ist notwendig um eine hohe Bildqualität in Papierstrichen zu erzielen.

Neben der hinreichend kleinen Partikelgröße erlaubt es das erfindungsgemäße Verfahren auch Dispersionen mit enger Partikelgrößenverteilung herzustellen, was ebenfalls wichtig für die Bildqualität von Papierstrichen ist. So bedingt nämlich eine sehr hohe Auflösung sehr kleine Durchmesser der absorbierten Tintentropfen. Diese hängen wiederum von der Partikelgröße der tintenabsorbierenden Partikel ab. Eine breite Partikelgrößenverteilung beinhaltet auch recht große Partikel und ist daher für hochauflösenden Tintenstrahldruck nicht geeignet.

Im Vergleich zu den bislang bekannten Verfahren zur Herstellung von aminosilanstabilisierten Fällungskieselsäuredispersionen, wie z. B. aus der EP 1 894 888, in denen das Silan und das Siliciumdioxid lediglich miteinander vermischt und ggf. geschert aber nicht vermahlen werden, bietet das erfindungsgemäße Verfahren den Vorteil, dass bei der Vermahlung neue Oberflächen an den Kieselsäurepartikeln gebildet werden, welche unmittelbar mit dem Silan reagieren können bevor es zur Reagglomeration kommt. Während andere Veröffentlichungen wie z. B. die EP 1 894 888 zwar allgemein hohe Feststoffgehalt für die Dispersionen angeben, in den Beispielen aber nur Feststoffgehalte unter 20 Gew. % erzielt werden, gelingt es mit dem Erfindungsgemäßen Verfahren tatsächlich hohe Feststoffgehalte von mehr als 25 Gew. % ohne vorherige vollständige Entfernung der mehrwertigen Anionen zu erzielen.

Gegenstand der vorliegenden Erfindung ist somit ein Verfahren zur Herstellung von Dispersionen umfassend gefällte Kieselsäure, dadurch gekennzeichnet, es die Schritte

    a) Herstellen einer Vordispersion aus zumindest einer gefällten Kieselsäure und
    b) Zuführung der Vordispersion zu einer Mahleinrichtung mit anschließender Vermahlung

umfasst, und dass im Laufe des Verfahrens zumindest Teile der Oberfläche der gefällten Kieselsäurepartikel und / oder der während der Vermahlung neu erzeugten Oberfläche der gefällten Kieselsäurepartikel mit zumindest einem Aminosilan derart beschichtet werden, dass das Aminosilan kovalent über eine Si-O-Si Bindung an die gefällten Kieselsäurepartikel angebunden wird.

Weiterhin sind Gegenstand der vorliegenden Erfindung Dispersionen aus gefällter Kieselsäure, **dadurch gekennzeichnet, dass**

    a) zumindest ein Aminosilan an zumindest einigen Stellen der Oberfläche der Fällungskieselsäurepartikel kovalent über eine Si-O-Si Bindung angebunden ist
    b) der mittlere Durchmesser $d_{50}$ der oberflächenmodifizierten Fällungskieselsäurepartikel zwischen 50 und 500 nm

und oder der $d_{90}$-Wert der Partikelgrößenverteilungskurve der oberflächenmodifizierten Fällungskieselsäurepartikel zwischen 150 und 800 nm liegt

c) der Feststoffgehalt der Dispersion größer oder gleich 20 Gew. % beträgt

d) der pH-Wert der Dispersion kleiner gleich 5 beträgt.

Schließlich ist Gegenstand der vorliegenden Erfindung die Verwendung der erfindungsgemäßen Fällungskieselsäuredispersionen zur Herstellung von Papierstrichen, bevorzugt Papierstrichen für Inkjetpapier, besonders bevorzugt als Topcoat für glänzendes Inkjetpapier oder als antikorrosiver Primer für die Beschichtung von Stahlbauteilen, bevorzugt Stahlrohren.

Die Gegenstände der vorliegenden Erfindung werden nachfolgend im Detail beschrieben, dabei werden die Begriffe Kieselsäure, Fällungskieselsäure, gefällte Kieselsäure bzw. gefälltes Siliciumdioxid synonym verwendet. In allen Fällen ist darunter gefälltes Siliciumdioxid, wie es zum Beispiel in Ullmann's Encyplopedia of Industrial Chemistry, 5. Auflage, Vol. A23, S. 642-647 beschrieben wird, zu verstehen. Zur Vermeidung reiner Wiederholungen wird der Inhalt dieser Druckschrift hiermit explizit in den Gegenstand und die Beschreibung der vorliegenden Erfindung einbezogen. Gefälltes Siliciumdioxid kann BET-Oberflächen bis zu 800 $m^2$/g aufweisen und wird durch Reaktion zumindest eines Silicats, bevorzugt eines Alkali- und oder Erdalkalisilicats, mit zumindest einem Säuerungsmittel, bevorzugt zumindest einer Mineralsäure, erhalten. Im Unterschied zu Kieselgelen (siehe Ullmann's Encyplopedia of Industrial Chemistry, 5. Auflage, Vol. A23, S. 629-635) bestehen Fällungskieselsäuren nicht aus einem gleichmäßigen dreidimensionalen $SiO_2$-Netzwerk, sondern aus einzelnen Aggregaten und Agglomeraten. Ein besonderes Merkmal von gefälltem Siliciumdioxid ist der hohe Anteil an so genannter innerer Oberfläche, der sich in einer sehr porösen Struktur mit Mikro- und Mesoporen widerspiegelt.

Gefällte Kieselsäuren unterscheiden sich zudem von pyrogenen Kieselsäuren, welche auch als AEROSILE® bezeichnet werden (siehe Ullmann's Encyplopedia of Industrial Chemistry, 5. Auflage, Vol. A23, S. 635-642). Pyrogene Kieselsäuren werden mittels Flammenhydrolyse aus Siliciumtetrachlorid gewonnen. Auf Grund des völlig anderen Herstellungsverfahrens weisen pyrogene Kieselsäuren unter anderem eine andere Oberflächenbeschaffenheit auf als gefällte Kieselsäuren. Dies drückt sich z. B. in der niedrigeren Zahl von Silanolgruppen auf der Oberfläche aus. Ferner entstehen bei der Herstellung von pyrogenen Kieselsäuren keine mehrwertigen Anionen. Das Verhalten von pyrogenen Kieselsäuren und gefällten Kieselsäuren in wässrigen Dispersionen, was hauptsächlich durch die Oberflächeneigenschaften bestimmt wird, kann daher nicht miteinander verglichen werden. Gefällte Kieselsäuren weißen ggü. pyrogenen Kieselsäuren unter anderem den Vorteil auf, dass sie wesentlich preisgünstiger sind.

Das erfindungsgemäße Verfahren ist ein Verfahren zur Herstellung von Dispersionen umfassend gefällte Kieselsäure, wobei zumindest ein Aminosilan an zumindest einigen Stellen der Oberfläche der gefällten Kieselsäurepartikel kovalent über eine Si-O-Si Bindung angebunden wird und dass Verfahren die Schritte

a) Herstellen einer Vordispersion aus zumindest einer gefällten Kieselsäure und

b) Zuführung der Vordispersion zu einer Mahleinrichtung mit anschließender Vermahlung

umfasst.

Zur Herstellung der Vordispersion kann im Prinzip jede Fällungskieselsäure, unabhängig von ihrer Darreichungsform verwendet werden. So kann z. B. eine Fällungskieselsäure in getrockneter Form, z. B. in Pulver-, Granulat- oder Micropearl-Form, oder in Form eines gewaschenen oder ungewaschenen Filterkuchens verwendet werden. Es ist aber auch möglich direkt eine Fällsuspension zu verwenden. Die Verwendung eines ungewaschenen Filterkuchens oder eine Fällsuspension hat den Nachteil, dass üblicher Weise sehr hohe Mengen an anorganischen Salzen wie z. B. Natriumsulfat vorhanden sind. Eine zu hohe Salzkonzentration kann für manche Anwendungen nachteilig sein. Daher kann es vorteilhaft sein, die Dispersion zunächst zu filtrieren, auszuwaschen und danach den erhaltenen Filterkuchen zu redispergieren. Diese Variante hat somit gegenüber dem Einsatz von ungewaschenem Filterkuchen bzw. einer Fällsuspension den Vorteil eines reduzierten Salzgehaltes, gegenüber der Verwendung von getrockneten Fällungskieselsäuren weist sie hingegen den Vorteil auf, dass nicht getrocknet werden muss und dadurch sowohl Prozeßschritte als auch Energiekosten eingespart werden können. Somit ist die Verwendung eines gewaschenen Filterkuchens besonders bevorzugt. Das Auswaschen des Filterkuchens - so wie es routinemäßig bei jeder Herstellung von gefällter Kieselsäure durchgeführt wird - reduziert die Menge an anorganischen Salzen stark, jedoch nicht weit genug, dass eine Eigenstabilisierung von Kieselsäuredispersionen oder deren Stabilisierung mit kationischen Polymeren wie p-DADMAC möglich wäre. Hierauf wurde weiter oben schon im Detail eingegangen. Zur Stabilisierung mit kationischen Polymeren müssten spezielle sehr aufwendige Schritte zur Hochaufreinigung durchgeführt werden was kosten und zeitintensiv ist. Für das erfindungsgemäße Verfahren reicht eine standardmäßige Wäsche aus, Restmengen an anorganischen Salzen und insbesondere mehrwertigen Anionen stören nicht.

Die Verwendung von getrockneten Fällungskieselsäuren kann sinnvoll sein wenn z. B. mehrere Fällungskieselsäuren gemischt werden sollen oder wenn zunächst ein Transport der Fällungskieselsäure an den Ort der Herstellung der Dispersion erfolgen muss. Das erfindungsgemäße Verfahren umfasst natürlich auch Mischformen der zuvor genannten Verfahren, d.h. z. B. die Herstellung einer Vordispersion aus einem Fällungskieselsäurepulver und einem Filterkuchen. Durch Mischen von verschiedenen Fällungskieselsäuren eröffnet das erfindungsgemäße Verfahren die Möglichkeit die Eigenschaften der Dispersion maßgeschneidert einstellen zu können.

Die in der erfindungsgemäßen Suspension enthaltenen Fällungskieselsäuren können nach beliebigen Verfahren hergestellt werden und können ein auf das geplante Anwendungsgebiet zugeschnittenes Eigenschaftsprofil aufweisen. Besonders bevorzugt werden solche Kieselsäuren verwendet wie sie in der Produktbroschüre "Sipernat - Performance Silica", der Firma Degussa AG, November 2003 beschrieben werden. Fällungskieselsäuren anderer Hersteller wie zum Beispiel W. R. Grace & Co., Rhodia Chimie, PPG Industries, Nippon Silica, Huber Inc. können selbstverständlich ebenfalls verwendet werden. Besonders bevorzugt werden Sipernat® 200 und Carplex® 80 der Evonik Degussa GmbH verwendet.

Unter anorganischen Salzen enthaltend mehrwertige Anionen sind vorzugsweise solche mit 2- oder 3-wertigen Anionen, besonders bevorzugt Sulfationen, zu verstehen. Die anorganischen Salze umfassen Salze die bei der Fällreaktion entstehen, Salze die als Elektrolyt vor oder während der Fällreaktion zugegeben wurden und/oder sonstige unerwünschte anorganische oder organische Salze die in der Suspension enthalten sind, z. B. Salze, die in den Edukten der Fällreaktion oder im Dispergiermedium bereits als Verunreinigungen enthalten waren. Besonders bevorzugt weist die zur Herstellung der Vordispersion verwendete Kieselsäure, bzw. der Filterkuchen bzw. die Dispersion (z. B. verflüssigter Filterkuchen, Fällsuspension) einen Gesamtgehalt an den mehrwertigen Anionen Sulfat, Phosphat und Carbonat in Summe, bezogen auf das Gewicht von Siliciumdioxid und den darin enthaltenen Verunreinigungen, von 0,005 bis 2 Gew. %, bevorzugt 0,05 bis 1 Gew. %, besonders bevorzugt 0,08 bis 0,3 Gew. % auf.

Die im erfindungsgemäßen Verfahren eingesetzten Fällungskieselsäuren weisen an ihrer Oberfläche reaktive Gruppen auf, die mit dem Aminosilan reagieren können. Die reaktiven Gruppen auf der Kieselsäureoberfläche umfassen sowohl solche, die bereits auf den eingesetzten Partikeln vorliegen als auch solche, die während des Dispergiervorganges, d.h. bei der Herstellung der Vordispersion bzw. bei der Vermahlung gebildet werden. Bei den reaktiven Gruppen handelt es sich überwiegend oder ausschließlich um OH-Gruppen.

Der mittlere Partikeldurchmesser $d_{50}$ der in der Vordispersion vorliegenden Fällungskieselsäureteilchen ist bevorzugt größer als 100 nm, besonders bevorzugt beträgt er 200 nm bis mehrere hundert Mikrometer. Die Partikel umfassen dabei sowohl Primärpartikel, Aggregate wie auch Agglomerate. Gewöhnlich beträgt der mittlere Partikeldurchmesser $d_{50}$ 1 bis 500 $\mu$m. Er kann zum Beispiel durch dynamische Lichtstreuung bestimmt werden.

Der Feststoffgehalt an Fällungskieselsäure in der Vordispersion bezogen auf das Gesamtgewicht der Vordispersion beträgt vorzugsweise 5 bis 40 Gew. %, besonders bevorzugt 20 bis 40 Gew. % und ganz besonders bevorzugt 25 bis 35 Gew. %.

Wie bereits angedeutet liegt ein besonderer Vorteil des erfindungsgemäßen Verfahrens darin, dass die durch die Fällungskieselsäure in die Dispersion eingeschleppten anorganischen Salze bzw. mehrwertigen Anionen nicht vollständig entfernt werden müssen. Daher weist die Vordispersion in einer bevorzugten Ausführungsform des erfindungsgemäßen Verfahrens einen Gehalt an anorganischen Salzen von 0,00015 bis 0,6 Gew. %, besonders bevorzugt 0,0015 bis 0,3 Gew. %, ganz besonders bevorzugt 0,0024 bis 0,09 Gew. % und speziell bevorzugt 0,0024 bis 0,03 Gew. % jeweils bezogen auf das Gesamtgewicht der Vordispersion auf. An dieser Stelle sei darauf hingewiesen, dass das erfindungsgemäße Verfahren seinen besonderen Wert bei Dispersionen enthaltend mehrwertige Anionen entfacht, dass das Verfahren jedoch selbstverständlich auch bei Dispersionen mit einwertigen Anionen angewendet werden kann und diese Verfahren mit eingeschlossen sind.

Neben zumindest einer Fällungskieselsäure umfasst die Vordispersion als Dispergiermittel in der Regel Wasser, bevorzugt entsalztes bzw. voll entsalztes Wasser (VE-Wasser). Die Techniken zum Entsalzen von Wasser wie z. B. Destillation oder Umkehrosmose sind dem Fachmann bekannt. Weiterhin kann die Vordispersion verschiedene Lösungsmittel enthalten. Dabei kann es sich um ein oder mehrere organische Lösungsmittel handeln, die in der Regel in geringeren Anteilen z.B. als Co-Lösungsmittel zugesetzt werden. Als zusätzliches organisches Lösungsmittel bzw. Dispergiermittel eignen sich sowohl polare als auch unpolare und aprotische Lösungsmittel.

Bevorzugt umfasst die Vordispersion auch ein Säuerungsmittel durch das der pH-Wert der Vordispersion besonders bevorzugt auf einen Wert von 2 bis 6, ganz besonders bevorzugt 3 bis 5 eingestellt wird. Als Säure kann jede dem Fachmann bekannte organische oder anorganische Säure verwendet werden. Vorzugsweise enthält die Säure mindestens eine Säuregruppe mit einem pKs-Wert < 6. Beispiele sind Salzsäure, Salpetersäure, Phosphorsäure, Schwefelsäure, Ameisensäure, Essigsäure, Propionsäure, Trioxadecansäure, Zitronensäure und Sulfonsäuren. Vorzugsweise wird eine monovalente organische oder anorganische Säure verwendet, besonders bevorzugt Salzsäure und ganz besonders bevorzugt Ameisensäure. Dies hat den Vorteil, dass beim Ansäuern nicht noch weitere mehrwertige Anionen in die Vordispersion eingebracht werden. Die Säure kann als solche oder in einem Lösungsmittel zugegeben werden. Bevorzugt wird die Säure in Form einer wässrigen Lösung zugegeben.

Das erfindungsgemäße Verfahren und die erfindungsgemäßen Dispersionen weisen den Vorteil auf, dass sie ohne Zusatz spezieller Stabilisatoren sedimentationsstabil sind. Dieser Vorteil schließt natürlich nicht aus, dass solche Stabilisatoren dennoch zugegeben werden, auch wenn dies besonders bevorzugt nur in Mengen von weniger als 2 Gew. % bezogen auf das Gesamtgewicht der Dispersion oder gar nicht der Fall ist.

Die Vordispersion wird hergestellt in dem die einzelnen Komponenten in einen Behälter gefüllt und mittels eines geeigneten Dispergieraggregats zu einer homogenen Vordispersion verarbeitet werden. Die Vordispersion kann mit deutlich niedrigerem Energieeintrag hergestellt werden als die Dispersion. Der Energieeintrag liegt bevorzugt im Bereich von 0,01 kWh/kg Feststoff bis 0,05 kWh/kg Feststoff. Beispielsweise können einfache Rührer, Dissolver oder Rotor-/Statormaschinen eingesetzt werden. Die Vordispersion dient hauptsächlich dem Zweck gegebenenfalls Agglomerate von oberflächenmodifizierten Siliciumdioxidpartikeln, die durch das Zusammenlagern von Aggregaten über kohäsive Kräfte entstehen können, aufzulösen. Dadurch wird zusätzliche Oberfläche erzeugt, welche mit dem Aminosilan reagieren kann.

Die fertige Vordispersion wird anschließend einer Mahleinrichtung zugeführt und mindestens einmal vermahlen. Bei der Mahleinrichtung handelt es sich vorzugsweise um eine Rührwerkskugelmühle oder eine Strahlmühle, besonders bevorzugt eine Rührwerkskugelmühle. Ganz besonders bevorzugt werden Rührwerkskugelmühlen deren Mahlraum mit einer abriebsfesten Keramik oder PU beschichtet ist in Kombination mit Mahlkugeln aus ytriumstabilisiertem Zirkonoxid verwendet.

Die Vermahlung wird vorzugsweise so lange durchgeführt, bis der der mittlere Durchmesser $d_{50}$ der oberflächenmodifizierten Fällungskieselsäurepartikel zwischen 50 und 500 nm, vorzugsweise 80 bis 300 nm, besonders bevorzugt 100 bis 200 nm und ganz besonders bevorzugt 110 bis 160 nm und / oder der $d_{90}$-Wert der Partikelgrößenverteilungskurve der oberflächenmodifizierten Fällungskieselsäurepartikel zwischen 100 und 800 nm, bevorzugt 100 bis 500 nm, besonders bevorzugt 120 bis 300 nm, ganz besonders bevorzugt 130 bis 250 nm, speziell bevorzugt 150 bis 200 nm und ganz speziell bevorzugt 150 bis weniger als 200 nm beträgt. Vorzugsweise liegt der Energieeintrag während der Vermahlung im Bereich von 0,1 kWh/kg Feststoff bis 1 kWh/kg Feststoff, besonders bevorzugt 0,1 kWh/kg Feststoff bis 0,5 kWh/kg Feststoff.

Der Feststoffgehalt der fertigen Dispersion nach Schritt b) liegt bei 20 bis 60 Gew. % $SiO_2$ bezogen auf das Gesamtgewicht der Dispersion, bevorzugt 25 bis 50 Gew. %, besonders bevorzugt 25 bis 40 Gew. %. Sollte der angestrebte Feststoffgehalt nach der Vermahlung noch nicht erreicht sein, so kann der Feststoff Gehalt mittels Verdünnen mit dem o. g. Wasser oder durch Einengen eingestellt werden. Techniken zum Einengen sind dem Fachmann bekannt.

Die Oberflächenmodifizierung mit zumindest einem Aminosilan kann im Rahmen des erfindungsgemäßen Verfahrens derart durchgeführt werden, dass zumindest ein Aminosilan vor und/oder während und/oder nach der Vermahlung, d.h. Schritt b) zugegeben wird. Bevorzugt wird zumindest ein Aminosilan während und/oder nach Schritt b) und / oder zur fertigen Vordispersion vor Schritt b) und / oder vor der Herstellung der Vordispersion und / oder während der Herstellung der Vordispersion zugegeben. Insbesondere sind folgende Ausgestaltungsformen umfasst:

In Variante 1 wird zumindest ein Aminosilan während und/oder nach der Vermahlung, d.h. nach Schritt b) zugegeben. In einer bevorzugten Variante 1a) wird in Schritt b) vermahlen, danach zumindest ein Aminosilan zugegeben und danach nochmals vermahlen. In einer anderen bevorzugten Variante 1b) wird das Aminosilan während der laufenden Vermahlung in Schritt b) auf einmal oder über einen längeren Zeitraum, kontinuierlich oder diskontinuierlich zugegeben. In Variante 2 wird zumindest ein Aminosilan zur fertigen Vordispersion zugegeben und danach vermahlen. Diese Variante 2 umfasst zwei Teilvarianten. In Teilvariante 2a wird zumindest ein Aminosilan zur fertigen Vordispersion zugegeben und für einen definierten Zeitraum, bevorzugt 10 bis 60 min, besonders bevorzugt 20 bis 40 min weitergerührt so dass das Aminosilan mit den Fällungskieselsäurepartikeln reagieren kann. Anschließend erfolgt dann die Vermahlung. In Variante 2b wird zumindest ein Aminosilan zur fertigen Vordispersion zugegeben und umgehend vermahlen. In Variante 3a wird das Aminosilan bereits vor der Herstellung der Vordispersion zugegeben und für einen definierten Zeitraum, bevorzugt 10 bis 60 min, besonders bevorzugt 20 bis 40 min die Kieselsäure mit dem Silan reagieren lassen. In Variante 3b wird das Aminosilan während der Herstellung der Vordispersion zugegeben. Beliebige Mischformen bzw. Abwandlungen der o. g. Varianten sind von der vorliegenden Erfindung mit eingeschlossen.

Als besonders bevorzugt haben sich die Varianten 1a, 1b, 3a und 3b erwiesen. Das Verfahren bei dem das Aminosilan zunächst zur Fällungskieselsäure zugegeben wird, danach die Reaktion zwischen Aminosilan und Fällungskieselsäure zumindest teilweise abgewartet wird und anschließend vermahlen wird erwies sich als besonders vorteilhaft, weil mit der erhaltenen Dispersion Topcoating für Inkjetpapier erhalten werden konnte, welche die beste Transparenz zeigten. Ferner zeigten diese Topcoatings sehr gute Glanzwerte, gute Farbintensitäten nach Tintenstrahldruck und gute Tintenabsorptionseigenschaften. Die Verfahrensvariante bei der die Vermahlung unmittelbar nach Zugabe des Aminosilans zur Fällungskieselsäurevordispersion durchgeführt wird führt ebenfalls zu sehr guten Ergebnissen z. B. zu den besten Tintenabsorptionseigenschaften. Jedoch sind im Vergleich zu der zuvor genannten Variante zu minimal schlechtere Glanzwerte und Farbintensitäten zu konstatieren. Dennoch sind diese beiden Varianten besonders bevorzugt.

Die Temperatur bei der Reaktion von Aminosilan mit der Fällungskieselsäure liegt bevorzugt oberhalb von 60°C und besonders bevorzugt bei 60 bis 100 °C.

Das Aminosilan sollte freie OH-Gruppen aufweisen um mit der Kieselsäure reagieren zu können. Solche OH-Gruppen können aber auch aus hydrolysierbaren Gruppen des Silans erhalten werden. So ist bekannt, dass hydrolysierbare Gruppen von Silanen in Gegenwart von Wasser unter Bildung von freien OH-Gruppen hydrolysiert werden können. Es ist auch bekannt, dass Säuren diese Hydrolyse katalysieren können. Inwieweit bzw. in welchem Ausmaß die Hydrolyse der sauren Aminosilane stattfindet, hängt von mehreren Faktoren ab, wie z.B. pH-Wert, Art des Silans, Zeit zwischen Zugabe der Säure zum Aminosilan und Mischen der Aminosilan-Lösung mit Silica, und kann vom Fachmann in gewünschter Weise gesteuert werden. Unabhängig von der Variante des erfindungsgemäßen Verfahrens sollte daher sichergestellt werden, dass vor und/oder während und/oder nach der Zugabe des Aminosilans in die Dispersion ein Säuerungsmittel zugegeben wird. Bevorzugt wird so viel Säuerungsmittel zugegeben, dass der pH-Wert des Reaktionsmediums, d.h. der Silanlösung oder der Dispersion, kleiner 7, bevorzugt 2 bis 6, besonders bevorzugt 3 bis 5 beträgt.

Unter den hydrolysierten Aminosilanen kann es auch teilweise zu Kondensationsreaktionen kommen, so dass in der Aminosilan-Lösung nach einer gewissen Zeit Kondensate enthalten sein können. Zweckmäßigerweise sollte ein zu großes Ausmaß der Kondensatbildung aber vermieden werden, so dass der Zeitraum zwischen Herstellung der sauren Aminosilan-Lösung und Mischen mit Silica nicht zu groß sein sollte. Bevorzugt sollte dieser Zeitraum nicht mehr als 1 h und besonders bevorzugt höchstens 30 min betragen.

In einer speziellen Variante der vorliegenden Erfindung wird das Verfahren derart durchgeführt, dass das Aminosilan nicht separat von der Säure zugegeben wird, sondern dass das Aminosilan zunächst mit der Säure vermischt und dann Säure und Silan zusammen zugegeben werden. Bevorzugt liegt in diesem Fall der pH-Wert der Aminosilan-Lösung im Bereich von 2 bis 6. Es ist ferner bevorzugt, dass es sich um eine wässrige saure Aminosilan-Lösung handelt. Zur Herstellung der sauren Aminosilan-Lösung werden ein oder mehrere Aminosilane mit einer Säure vermischt. Sowohl das Aminosilan als auch die Säure können in einem Lösungsmittel gelöst sein, was für beide Komponenten auch bevorzugt ist. In einer weiteren bevorzugten Ausführungsform wird die Aminosilan-Lösung durch Mischen von unverdünntem Aminosilan mit der wässrigen Säure erhalten. Beispiele für Lösungsmittel sind Wasser und organische Lösungsmittel, wobei jeweils Wasser oder ein wässriges Lösungsmittel, d.h. ein Lösungsmittelgemisch mit überwiegendem Anteil von Wasser, bevorzugt sind. Für Beispiele für einsetzbare organische Lösungsmittel und die möglichen Volumenanteile von Wasser im Lösungsmittelgemischen wird auf die vorstehend genannten Beispiele für die Silicadispersion verwiesen.

Die eingesetzten Aminosilane weisen vorzugsweise die allgemeine Formel $R_aSiX_{(4-a)}$ auf, worin alle Reste X gleich oder verschieden sein können und hydrolysierbare Gruppen oder Hydroxygruppen bedeuten, die Reste R gleich oder verschieden sind und nicht hydrolysierbare Gruppen darstellen, wobei mindestens ein Rest R mindestens eine Aminogruppe umfasst, und a den Wert 1, 2 oder 3, bevorzugt 1 oder 2, hat.

In der allgemeinen Formel ist X eine Hydroxygruppe oder eine hydrolysierbare Gruppe, die gleich oder voneinander verschieden sein können, z.B. Wasserstoff oder Halogen (F, Cl, Br oder I), Alkoxy (vorzugsweise C1-C6-Alkoxy, wie z.B. Methoxy, Ethoxy, n-Propoxy, i-Propoxy und Butoxy), Aryloxy (vorzugsweise C6-C10-Aryloxy, wie z.B. Phenoxy), Acyloxy (vorzugsweise C1-C6-Acyloxy, wie z.B. Acetoxy oder Propionyloxy), Alkylcarbonyl (vorzugsweise C2-C7-Alkylcarbonyl, wie z.B. Acetyl), $-N(H)-Si(R_3)$ (Silazan, wobei R wie nachstehend definiert ist), Amino, Monoalkylamino oder Dialkylamino mit vorzugsweise 1 bis 12, insbesondere 1 bis 6 Kohlenstoffatomen. X kann auch eine Siloxygruppe sein, z.B. $-OSiY_3$, wobei Y gleich oder verschieden eine der vorstehend definierten Gruppen für X sein kann. Bevorzugte hydrolysierbare Reste sind Halogen, Alkoxygruppen und Acyloxygruppen. Besonders bevorzugte hydrolysierbare Reste sind C1-C4-Alkoxygruppen, insbesondere Methoxy und Ethoxy.

Bei den nicht hydrolysierbaren Resten R, die gleich oder voneinander verschieden sein können, weist mindestens ein Rest R mindestens eine Aminogruppe auf. Bevorzugt liegt ein nicht hydrolysierbarer Rest mit mindestens einer Aminogruppe vor. Die Reste R können gegebenenfalls einen oder mehrere übliche Substituenten, wie z.B. Alkyl, Halogen oder Alkoxy, aufweisen.

Beispiele für nicht hydrolysierbare Reste R ohne Aminogruppe sind Alkyl (vorzugsweise C1-C16-Alkyl, wie Methyl, Ethyl, n-Propyl, Isopropyl, n-Butyl, sek.-Butyl und tert.-Butyl, Pentyl, Hexyl, Octyl oder Undecyl), Cycloalkyl (vorzugsweise C4-C12-Cycloalkyl, wie Cyclopentyl oder Cyclohexyl), Alkenyl (vorzugsweise C2-C6-Alkenyl, wie z.B. Vinyl, 1-Propenyl, 2-Propenyl und Butenyl), Alkinyl (vorzugsweise C2-C6-Alkinyl, wie z.B. Acetylenyl und Propargyl), Aryl (vorzugsweise C6-C10-Aryl, wie z.B. Phenyl und Naphthyl) sowie entsprechende Alkaryle und Aralkyle, die bevorzugt 7 bis 24 C-Atome enthalten (z.B. Tolyl, Benzyl und Phenethyl). Bevorzugt sind Alkylreste.

Bei dem nicht hydrolysierbaren Rest R mit mindestens einer Aminogruppe kann die Aminogruppe endständig, seitenständig und/oder in der Hauptkette des Rests enthalten sein. Der Rest R kann auch zwei oder mehr Aminogruppen aufweisen. Die Aminogruppen im Rest R sind über Alkylen-, Alkenylen- oder Arylen-Brückengruppen, die durch Sauerstoffatome unterbrochen sein können, an das Siliciumatom gebunden. Die genannten zweiwertigen Brückengruppen leiten sich z.B. von den oben genannten einwertigen Alkyl-, Cycloalkyl-, Alkenyl-, Aryl-, Alkaryl- oder Aralkylresten ab. Die Brückengruppen enthalten in der Regel 1 bis 18, vorzugsweise 1 bis 12 und insbesondere 1 bis 6 Kohlenstoffatomen. Sofern Aminogruppen in der Hauptkette enthalten sind, können zwei oder mehr solcher Brückengruppen enthalten sein.

Das N-Atom der Aminogruppe kann substituiert sein oder nicht. Bei der oder den Aminogruppen des Restes R kann es sich um primäre, sekundäre oder tertiäre Aminogruppen $-NR^1{}_2-$ bei endständigen oder seitenständigen Aminogruppen oder $-NR^1-$ bei Aminogruppen in der Hauptkette oder einer Seitenkette handeln, wobei die Gruppen $R^1$

gleich oder verschieden sind und aus Wasserstoff, Alkyl, Cycloalkyl, Alkenyl, Aryl, Alkaryl oder Aralkyl ausgewählt sein können. Als konkrete Beispiele für die Reste R[1] neben Wasserstoff sei auf die vorstehenden Beispiele für die entsprechenden Reste R ohne Aminogruppe und die entsprechenden Gruppen der nachstehenden konkreten Beispiele verwiesen. R[1] kann auch Substituenten aufweisen, z.B. Hydroxy, Alkoxy, Nitro, Carbonyl, Halogen oder Alkyl, oder durch Sauerstoffatome unterbrochen sein. Beispiele für solche Gruppen R[1] sind Acryloxy, Acetylglycyl, oder Hydroxyalkyl wie Hydroxyethyl. Das Aminosilan ist bevorzugt eine monomere Verbindung und enthält bevorzugt nicht mehr als 4 und bevorzugter nicht mehr als 3 Siliciumatome. Besonders bevorzugt enthält das Aminosilan nur ein Siliciumatom.

Konkrete Beispiele für einsetzbare Aminosilane sind Aminopropyltriethoxysilan, Aminopropyltrimethoxysilan, Aminomethyltriethoxysilan, Aminomethyltrimethoxysilan, Aminopropyltrichlorsilan, (N-Cyclohexylaminomethyl) triethoxysilan, 2-Aminoethyl-3-aminopropyltrimethoxysilan, N-(n-Butyl)-3-Aminopropyltrimethoxysilan, 2-Aminoethyl-3-aminopropylmethyldimethoxysilan, (3-Aminopropyl)diethoxymethylsilan, (3-Amino-propyl)ethyldiethoxysilan, (3-Methylaminopropyl)trimethoxysilane, (Aminoethylamino-methyl)phenethyltrimethoxysilan, (N,N-Diethyl-3-aminopropyl)trimethoxysilan, (N,N-Dimethylamino)dimethylchlorosilan, (N,N-Dimethylaminopropyl)trimethoxysilan, (N-Acetylglycyl)-3-aminopropyltrimethoxysilan, (N-Cyclohexylaminomethyl)methyldiethoxysilan, (N-Cyclohexylaminomethyl)triethoxysilan, (N-Phenylaminomethyl)methyl-dimethoxysilan, (N-Phenylaminomethyl)trimethoxysilan, 11-Aminoundecyltriethoxysilan, 3-(1,3-Dimethylbutyliden)aminopropyltriethoxysilan, 3-(1-Aminopropoxy)-3,3-dimethyl-1-propenyltrimethoxysilan, 3-(2,4-Dinitrophenylamino)propyltriethoxysilan, 3-(2-Aminoethylamino)propylmethyldimethoxysilan, 3-(2-Aminoethylamino)propyl-trimethoxysilan, 3-(Cyclohexylamino)propyltrimethoxysilan, 3-(Aminophenoxy)-propyltrimethoxysilan, 3-(N-Allylamino)propyltrimethoxysilan, 3-(N-Styrylmethyl-2-aminoethylamino)-propyltrimethoxysilan, 3-(Phenylamino)propyltrimethoxysilan, 3-Aminopropyldiisopropylethoxysilan, 3-Aminopropyldimethylethoxysilan, 3-Aminopropylmethylbis(trimethylsiloxy)silan, 3-Aminopropylmethyldiethoxysilan, 3-Aminopropyltris-(methoxyethoxy)silan, 3-Aminopropyltris(trimethylsiloxy)silan, 4-Aminobutyltriethoxysilan, Aminophenyltrimethoxysilan, Bis(2-hydroxyethyl)-3-aminopropyltriethoxysilan, Diethylaminomethyltriethoxysilan, N,N-Dimethylaminomethylethoxysilan, N-(2-Aminoethyl)-3-aminoisobutyldimethylmethoxysilan, N-(2-Aminoethyl)-3-aminopropylmethyldimethoxysilan, N-(2-Aminoethyl)-3-aminopropyltriethoxysilan, N-(2-Aminoethyl)-3-aminopropyltrimethoxysilan, N-(2-Aminomethyl)-1 1 -aminoundecyltrimethoxysilan, N-(3-Acryloxy-2-hydroxypropyl)-3-aminopropyltriethoxysilan, N-(3-Methacryloxy-2-hydroxypropyl)-3-aminopropyltri-ethoxysilan, N-(6-Aminohexyl)-aminopropyltrimethoxysilan, N-(Hydroxyethyl)-N-methylaminopropyltrimethoxysilan, N-3-[(Amino(polypropylenoxy)]aminopropyltrimethoxysilan, n-Butylaminopropyltrimethoxysilan, N-Cyclohexylaminopropyltrimethoxysilan, N-Ethylaminoisobutylmethyldiethoxysilan, N-Ethylaminoisobutyltrimethoxysilan, N-Methylaminopropylmethyldimethoxysilan, N-Methylaminopropyltrimethoxysilan, N-Phenylaminomethyltriethoxysilan, Phenylbis(dimethylamino)chlorosilan, tert.-Butylaminopropyltrimethoxysilan, Aminopropylsilanetriol, N-(2-Aminoethyl)-3-aminopropyl-silantriol, N-Cyclohexylaminomethyltriethoxysilan, N-Cyclohexylaminomethylmethyldiethoxysilan und N-Phenylaminomethyltrimethoxysilan.

Wichtig ist, dass das Aminosilan mindestens ein basisches N-Atom aufweist, das durch eine Säure protoniert werden kann.

Die Aminosilane und die nachstehend diskutierten gegebenenfalls zusätzlich einsetzbaren anderen hydrolysierbaren Silane zur Oberflächenmodifikation lassen sich nach bekannten Methoden herstellen; vgl. W. Noll, "Chemie und Technologie der Silicone", Verlag Chemie GmbH, Weinheim/Bergstrasse (1968), und sind im Handel erhältlich.

Weitere nicht hydrolysierbare Reste R können solche mit einer reaktiven Gruppe sein, wobei diese Reste auch insbesondere in den nachstehend diskutierten gegebenenfalls zusätzlich einsetzbaren anderen hydrolysierbaren Silanen zur Oberflächenmodifikation enthalten sein können, wobei die reaktive Gruppe z.B. eine Acryl- bzw. Acryloxy-, Methacryl- bzw. Methacryloxy-, eine bevorzugt geschützte Isocyanato-, eine Hydroxy-, Thio-, Glycidyl- bzw. Glycidyloxy- oder Säureanhydridgruppe ist. Diese reaktiven Gruppen können über Alkylen-, Alkenylen- oder Arylen-Brückengruppen, die durch Sauerstoff- oder -NH-Gruppen unterbrochen sein können, an das Siliciumatom gebunden sein. Die Brückengruppen enthalten vorzugsweise 1 bis 18 und insbesondere 1 bis 6 Kohlenstoffatome. Die genannten zweiwertigen Brückengruppen und gegebenenfalls vorliegende Substituenten leiten sich z.B. von den oben genannten einwertigen Alkyl-, Alkenyl-, Aryl-, Alkaryl- oder Aralkylresten ab. Der Rest R kann auch mehr als eine reaktive Gruppe tragen. Insbesondere kann auch das Aminosilan, z.B. an dem Rest mit einer Aminogruppe auch eine solche reaktive Gruppe tragen.

Beispiele für nicht hydrolysierbare Reste R mit reaktiven Gruppen sind (Meth)acryloxy-(C1-C6)-alkylen, z.B. (Meth)acryloxymethyl, (Meth)acryloxyethyl oder (Meth)acryloxypropyl, Isocyanato-(C1-C6)-alkylen, wie 3-Isocyanatopropyl, Thio-(C1-C6)-alkylen, wie Thiopropyl, Glycidyloxy-(C1-C6)-alkylen, wie Glycidyloxypropyl, (Meth)acryl steht für Methacryl oder Acryl. Beispiele für entsprechende Aminosilane oder die nachstehend diskutierten gegebenenfalls zusätzlich einsetzbaren anderen hydrolysierbaren Silane mit reaktiver Gruppe sind (Meth)acryloxypropylsilane und (Meth)acryloxymethylsilane, wie 3-(Meth)-acryloxypropyltriethoxysilan, 3-(Meth)acryloxypropyltrimethoxysilan, 3-(Meth)-acryloxymethyltriethoxysilan und 3-(Meth)acryloxymethyltrimethoxysilan, Bis(2-hydroxyethyl)-3-aminopropyltriethoxysilan, gegebenenfalls blockiertes 3-Isocyanatopropyltriethoxysilan und 3-Isocyanatopropyldimethylchlorsilan, Hydroxymethyltriethoxysilan, Mercaptopropyltriethoxysilan, Glycidyloxypropyltrimethoxysilan und Glycidyloxypropyltriethoxysilan.

Ferner können ein oder mehrere nicht hydrolysierbare Reste R im Aminosilan und insbesondere in den nachstehend diskutierten gegebenenfalls zusätzlich einsetzbaren anderen hydrolysierbaren Silanen zur Oberflächenmodifikation organische Reste aufweisen, welche mit Fluor substituiert sind, insbesondere lineare oder verzweigte (Per) fluoralkylgruppen. Vorzugsweise enthalten solche fluorierte Gruppen R 1 bis 30 Fluoratome, die bevorzugt an aliphatische Kohlenstoffatome gebunden sind. Bevorzugt sind die mit Fluor substituierten Kohlenstoffatome über eine nicht fluorierte Alkylenbrücke wie eine Ethylengruppe an das Si gebunden. Beispiele für einsetzbare fluorierte Reste R sind $CF_3CH_2CH_2-$, $C_2F_5CH_2CH_2-$, n-$C_6F_{13}CH_2CH_2-$, i-$C_3F_7OCH_2CH_2CH_2-$, n-$C_8F_{17}CH_2CH_2-$ und n-$C_{10}F_{21}-CH_2CH_2-$. Beispiele für als zusätzliche Silane einsetzbare Fluorsilane sind $CF_3CH_2CH_2Si(CH_3)(OCH_3)_2$, $C_2F_5-CH_2CH_2-Si(OCH_3)_3$, n-$C_6F_{13}-CH_2CH_2Si(OC_2H_5)_3$, n-$C_8F_{17}-CH_2CH_2-Si(OC_2H_5)_3$, n-$C_{10}F_{21}-CH_2CH_2-Si$ $(OC_2H_5)_3$, i-$C_3F_7O-CH_2CH_2CH_2-SiCl_2(CH_3)$, n-$C_6F_{13}-CH_2CH_2-Si(OCH_2CH_3)_2$ und n-$C_6F_{13}-CH_2CH_2-SiCl_2(CH_3)$ .

Das Aminosilan kann wie bereits vorstehend diskutiert gegebenenfalls auch in Mischung mit einem oder mehreren anderen hydrolysierbaren Silanen zur Oberflächenmodifikation eingesetzt werden, z.B. wenn der Wunsch besteht, der Kieselsäure eine weitere Eigenschaft zu verleihen. Das weitere Silan ist bevorzugt in der Aminosilan-Lösung enthalten. Allgemein sind hierfür alle hydrolysierbaren Silane geeignet, die mindestens eine nicht hydrolysierbare Gruppe aufweisen, wobei die nicht hydrolysierbare Gruppe(n) keine Aminogruppen aufweisen. Solche Silane sind dem Fachmann bekannt um im Handel erhältlich.

Beispielsweise kann es sich um Silane der vorstehenden Formel $R'_bSiY_{(4-b)}$ handeln, wobei die Reste Y gleich oder verschieden sind und hydrolysierbare Gruppen oder Hydroxygruppen bedeuten, die Reste R' gleich oder verschieden sind und nicht hydrolysierbare Gruppen darstellen, wobei kein R 'eine Aminogruppe umfasst, und b den Wert 1, 2 oder 3, bevorzugt 1 oder 2, hat. Definitionen und spezielle Beispiele für die Reste R' und Y sind, abgesehen von den Aminogruppen, die gleichen wie vorstehend für R und X bei den Aminosilane angegeben, weswegen darauf verwiesen wird. Der oder die Reste R' können neben üblichen Substituenten wie vorstehend angegeben auch die vorstehend angegebenen reaktiven funktionellen Gruppen enthalten, wie insbesondere (Meth)acrylGruppen, geschützte Isocyanatgruppen, Hydroxyguppen, Thiogruppen und Anhydridgruppen. Weitere geeignete Reste R sind lineare oder verzweigte (Per)fluor-alkylgruppen. Beispiele für zusätzliche Silane mit reaktiver Gruppe oder (Per)fluoralkylgruppe wurden bereits oben genannt. Weiterhin können erfindungsgemäß als Silane so genannte Hydrosil-Systeme eingesetzt werden. Unter Hydrosil-Systemen werden hier im Wesentlichen auf Wasser basierende, chloridfreie, vorwiegend leicht saure, wässrige Systeme verstanden, die ein Gemisch wasserlöslicher, praktisch vollständig hydrolysierter (Fluor)Alkyl-/Aminoalkyl-/Hydroxy- (bzw. Alkoxy-)Siloxane enthalten, wie sie beispielsweise aus EP 0 716127 A, EP 0 716128 A, EP 0 846 717 A, EP 1 101 787 A sowie DE 10 2007 040 802 A zu entnehmen sind. Besonders bevorzugt handelt es sich um wässrige Siloxane, VOC-frei, d. h. frei von flüchtigen organischen Verbindungen (volatile organic compounds), wie z. B. Dynasylan® HYDROSIL 1151, Dynasylan® HYDROSIL 2627, Dynasylan® HYDROSIL 2909, Dynasylan® HYDROSIL 2929, Dynasylan® HYDROSIL 2776 der Fa. Degussa Evonik Degussa GmbH. Schließlich können besonders bevorzugt Hydrosile mit quaternärer Aminofunktion wie in der DE 10 2009 001966 beschrieben eingesetzt werden.

Die erfindungsgemäßen Dispersionen aus gefällter Kieselsäure, zeichnen sich dadurch aus, dass

a) zumindest ein Aminosilan an zumindest einigen Stellen der Oberfläche der Fällungskieselsäurepartikel kovalent mittels einer Si-O-Si Bindung gebunden ist. Dabei kann es sein, dass ein Aminosilan über eine Si-O-Si Bindung kovalent an die Kieselsäure gebunden ist, es kann aber auch sein, dass ein Aminosilanmolekül mehrere OH-Gruppen aufweist, so dass ein es durch mehrere Si-O-Si Bindungen kovalent an die Kieselsäure gebunden sein kann.

b) der mittlere Durchmesser $d_{50}$ der oberflächenmodifizierten Fällungskieselsäurepartikel zwischen 50 und 500 nm vorzugsweise 80 bis 300 nm, besonders bevorzugt 100 bis 200 nm und ganz besonders bevorzugt 110 bis 160 nm und / oder der $d_{90}$-Wert der Partikelgrößenverteilungskurve der oberflächenmodifizierten Fällungskieselsäurepartikel zwischen 150 und 800 nm, bevorzugt 150 bis 500 nm, besonders bevorzugt 150 bis 300 nm, ganz besonders bevorzugt 150 bis 250 nm, speziell bevorzugt 150 bis 200 nm und ganz speziell bevorzugt 150 bis weniger als 200 nm liegt. Die erfindungsgemäßen Dispersionen ermöglichen es dadurch im Bereich des hochauflösenden Tintenstrahldrucks eingesetzt zu werden.

c) der Feststoffgehalt der Dispersion größer oder gleich 20 Gew. %, vorzugsweise zwischen 20 und 60 gew. %, besonders bevorzugt 25 bis 50 gew. % und ganz besonders bevorzugt 25 bis 40 gew. % beträgt. Dadurch weisen die erfindungsgemäßen Dispersionen einen ökonomischen Vorteil gegenüber Dispersionen mit niedrigerem Feststoffgehalt wie z. B. denen aus der EP 1 894 888. Gegenüber den bekannten hochgefüllten Kieselsäuredispersionen, welche allesamt weitgehend vom mehrwertigen Anionen befreit sind, weisen die erfindungsgemäßen Dispersionen den Vorteil auf, dass auf die aufwendige Aufreinigung, d.h. Entfernung der mehrwertigen Anionen verzichtet werden kann.

d) der pH-Wert der Dispersion kleiner gleich 5 beträgt. Der niedrige pH-Wert ist zur Kationisierung der Aminogruppe der Aminosilane notwendig und sorgt für eine hinreichend elektrostatische Abstoßung der Partikel in der Dispersion untereinander.

Die in den Dispersionen enthaltenen Fällungskieselsäuren bzw. Aminosilane entsprechend den oben bei der Beschreibung des Verfahrens detailliert beschriebenen.

Die erfindungsgemäßen Dispersionen können zur Herstellung von Papierstrichen, bevorzugt Papierstrichen für Inkjetpapier, besonders bevorzugt als Topcoat für glänzendes Inkjetpapier oder als antikorrosiver Primer für die Beschichtung von Stahlbauteilen, bevorzugt Stahlrohren verwendet werden.

Die physikalisch-chemischen Daten der gefällten Kieselsäuren als Ausgangsmaterial sowie in der Dispersion werden wie folgt bestimmt:

**Bestimmung des Feststoffgehalts in der Dispersion und der Vordispersion**

Die Dispersion bzw. Vordispersion wird in einem IR-Trockner bis zur Gewichtskonstanz getrocknet. Der Trocknungsverlust besteht überwiegend aus Wasserfeuchtigkeit.

Bei dieser Bestimmung werden in eine tarierte Aluminiumschale 2,0 g Kieselsäuredispersion eingefüllt und der Deckel der IR-Trockeneinheit (Fa. Mettler, Typ LP 16) geschlossen. Nach Drücken der Starttaste beginnt die Trocknung der Suspension bei 105 °C, die automatisch beendet wird, wenn die Gewichtsabnahme pro Zeiteinheit den Wert von 2 mg/(120 s) unterschreitet.

Die Gewichtsabnahme in % wird vom Gerät bei Anwahl des 0-100 %-Modus direkt angezeigt. Der Feststoffgehalt ergibt sich gemäß

$$\texttt{Feststoffgehalt in \% = 100 \% - Gewichtsabnahme in \%.}$$

**Bestimmung der Partikelgrößenverteilung ($d_{50}$- und $d_{90}$-Wert)**

Die Anwendung der Laserbeugung zur Bestimmung von Teilchengrößen von Pulvern basiert auf der Erscheinung, dass Teilchen monochromatisches Licht mit unterschiedlichem Intensitätsmuster in alle Richtungen streuen. Diese Streuung ist abhängig von der Teilchengröße. Je kleiner die Teilchen, desto größer sind die Streuungswinkel.

Die Probenvorbereitung und Messung (Spülen des Moduls, etc.) erfolgt im Fall hydrophiler Fällungskieselsäure mit VE Wasser, im Fall nicht ausreichend mit Wasser benetzbarer Fällungskieselsäure mit reinem Ethanol.

Vor Beginn der Messung lässt man das Laserbeugungsgerät LS 230 (Fa. Coulter) und das Flüssigkeitsmodul (Small Volume Module Plus, 120 ml, Fa. Coulter) 2 h warmlaufen, spült das Modul dreimal mit VE Wasser, kalibriert es und spült im Falle hydrophober Fällungskieselsäuren dreimal mit Ethanol.

In der Steuerleiste der Gerätesoftware wählt man über dem Menüpunkt "Messung" das Dateifenster "Opt. Modell berechnen" aus und legt die Brechungsindizes in einer .rfd-Datei fest: Flüssigkeitsbrechungsindex B. I. Real = 1,332 (1,359 für Ethanol); Material Brechungsindex Real = 1,46; Imaginär = 0,1; Formfaktor 1. Zusätzlich wählt man in diesem Dateifenster die folgenden Punkte aus: Offsetmessung, Justieren, Hintergrundmessung, Messkonz. einstellen, Probeninfo eingeben, Messinfo eingeben, Messzeit 60 s, Anzahl Messungen 1, ohne PIDS Daten, Größenverteilung. Die Pumpengeschwindigkeit wird am Gerät auf 30 % eingestellt.

Es erfolgt die Zugabe der homogenen Suspension von 1 g Kieselsäure in 40 ml VE Wasser mit einer 2 ml Einwegpipette in das Flüssigkeitsmodul des Gerätes in der Art, dass eine konstante Konzentration mit einer Lichtabsorption von 8 bis 12 % erreicht wird und das Gerät "OK" meldet. Die Messung erfolgt bei Raumtemperatur. Aus der Rohdatenkurve berechnet die Software auf Basis der Volumenverteilung unter Berücksichtigung der Mie-Theorie und der optischen Modellparameter (.rfd-Datei) die Teilchengrößenverteilung, den $d_{50}$-Wert (Medianwert) und den $d_{90}$-Wert.

**Bestimmung der BET-Oberfläche**

Die spezifische Stickstoff-Oberfläche (im folgenden BET-Oberfläche genannt) der pulverförmigen, in etwa sphärische Partikel aufweisende oder granulären Kieselsäure wird in Anlehnung an ISO 5794-1/Annex D mit dem Gerät TRISTAR 3000 ( Fa. Micromeritics) nach der Multipointbestimmung gemäß DIN-ISO 9277 ermittelt.

**Bestimmung des pH-Wertes der Dispersion**

Der pH-Wert der Dispersion wird gemäß ISO 787/9 bestimmt.

**Bestimmung des pH-Wertes der Aminosilan-Lösung**

Der pH-Wert der Aminosilanlösung wird nach bekannten Methoden mittels einer zuvor kalibrierten Einstabmesskette bestimmt

**Bestimmung des SiO$_2$-Gehaltes**

Die Bestimmung des SiO$_2$-Gehaltes erfolgt nach ISO 3262-19.

**Bestimmung des Gehalts an anorganischen Salzen in der Vordispersion und in der Enddispersion**

Der Gehalt an anorganischen Salzen der nicht mit Silanen modifizierten Kieselsäuredispersionen ergibt sich aus dem wie oben beschrieben ermittelten Feststoffgehalt der Dispersion abzüglich dem wie oben beschrieben ermittelten SiO$_2$-Gehalt des Feststoffs.

Bei bereits oberflächenmodifizierten

Kieselsäuredispersionen ist der Feststoffgehalt der Dispersion neben dem SiO$_2$-Gehalt zusätzlich um die Menge des absorbierten Silans zu korrigieren.

**Bestimmung des Gehalts an mehrwertigen Anionen (Sulfat, Carbonat, Phosphat) der zur Herstellung der Vordispersion eingesetzten Kieselsäure bzw. des Filterkuchens bzw. der Dispersion (z. B. verflüssigter Filterkuchen oder Fällsuspension)**

Der Sulfatgehalt der getrockneten Kieselsäure getrockneten Probe (Feuchtegehalt unter 10 Gew. %) wird nach ISO 787-13 bestimmt.

Der Carbonatgehalt wird bestimmt in dem 50 - 100 mg der getrockneten Probe (Feuchtegehalt unter 10 Gew. %) mit 10 ml Schwefelsäure (25%ig) versetzt und die Lösung wird mittels Gasflamme (Bunsenbrenner) zum leichten Sieden erhitzt wird. Mittels einer Vakuumpumpe werden die entstehenden Gase zu einer Leitfähigkeitsmesszelle transportiert. Die Kalibrierung erfolgt mit CaCO3.

Der Phosphatgehalt Kieselsäure wird im Rahmen der vorliegenden Erfindung über den Gesamtphosphorgehalt bestimmt, d.h. es wird postulliert, dass der gesamte Phosphor in der Kieselsäure als Phosphat vorliegt. Der Gesamtphosphorgehalt wird wie folgt bestimmt:

**Bestimmung von Phosphor in Kieselsäuren mittels hochauflösender induktiv gekoppelter Plasma-Massenspektrometrie (HR-ICPMS)**

1 - 5 g der getrockneten Kieselsäure getrockneten Probe (Feuchtegehalt unter 10 Gew. %) werden auf 1 mg genau in einen PFA-Becher eingewogen. Es werden 25 - 30 g Flusssäure (ca. 50 %) zugegeben. Nach kurzem Umschwenken wird der PFA-Becher in einem Heizblock auf 110°C erhitzt, so dass die in der Probe enthaltene Kieselsäure als Hexafluorokieselsäure sowie die überschüssige Flusssäure langsam abdampft. Der Rückstand wird mit 0,5 ml Salpetersäure (ca. 65 %) und wenigen Tropfen Wasserstoffperoxid-Lösung (ca. 30 %) ungefähr 1 Stunde gelöst und mit Reinstwasser auf 10 g aufgefüllt.

Zur Bestimmung von Phosphor werden den Aufschlusslösungen 0,05 ml bzw. 0,1 ml entnommen, in ein Polypropylen-Probenröhrchen überführt, mit 0,1 ml Indium-Lösung (c = 0,1 mg/l) als interner Standard versetzt und auf 10 ml mit verdünnter Salpetersäure (ca. 3%) aufgefüllt.

Aus einer Phosphor-Stammlösungen (c = 10 mg/l) werden vier Kalibrationslösungen erstellt (c = 0,1; 0,5; 1,0; 5,0 $\mu$g/l), wiederum mit dem Zusatz von 0,1 ml Indium-Lösung (c = 0,1 mg/l) auf 10 ml Endvolumen. Zusätzlich werden Blindwertlösungen hergestellt mit 0,1 ml Indium-Lösung (c = 0,1 mg/l) auf 10 ml Endvolumen.

Die Elementgehalte in den so hergestellten Blindwert-, Kalibrations- und Probenlösungen werden mittels der High Resolution Inductively Coupled Mass Spectrometry (HR-ICPMS) und mittels externer Kalibration quantifiziert. Die Messung erfolgt mit einer Massenauflösung (m/$\Delta$m) von mind. 4000.

Die nachfolgenden Beispiele dienen lediglich zum näheren Verständnis der vorliegenden Erfindung schränken diese aber in keiner Weise ein.

**Beispiel 1**

Herstellung der Vordispersion

In einer Dispergiereinheit bestehend aus einem Scheraggregat Ultra-Thurrax und einem Behälter wurden 1200 g vollentsalztes Wasser vorgelegt und 619 g Sipernat 200 homogen eingebracht. Diese Dispersion wurde mittels Scherenergie auf 70°C erhitzt. Danach wurde in diese Vordispersion 172 g Dynasilan® 1189, das 20%ig in Methanol verdünnt war, zugetropft und der pH Wert mit 49 g HCl konstant auf pH 3 gehalten.

Vermahlung der Vordispersion

Die Vermahlung wurde in einer Rührwerkskugelmühle Typ LS 1 der Firma Netzsch Condux durchgeführt. Dazu wurde die Vordispersion in einem auf 60 °C beheizten Behälter vorgelegt und durch eine Pumpe in den Mahlraum der Mühle gepumpt, aus dem sie wieder in den selben Behälter zurück floss. Die Suspension wurde also in Kreislauffahrweise vermahlen. Nach Einbringung von Mahlenergie, die durch die Stromaufnahme des Mühlenantriebs bestimmt wurden, wurde die Partikelgrößenverteilung bestimmt. Nach 90 Minuten Mahlzeit wurde so ein mittlerer Partikeldurchmesser $d_{50}$ von 150 nm und ein $d_{90}$- Wert von 240 nm erreicht.

Anwendungstest

Aus der so erhaltene n(Roh-)dispersion wurde ein Papierstrich hergellt, der in den Anwendungseigenschaften ein sehr gutes Ergebnis gezeigt hat.

**Beispiel 2**

Herstellung der Vordispersion

In einer Dispergiereinheit bestehend aus einem Scheraggregat Ultra-Thurrax und einem Behälter wurden 1800 g vollentsalztes Wasser vorgelegt und 360 g Carplex® 80 homogen eingebracht. Diese Dispersion wurde mittels Scherenergie auf 70°C erhitzt. Anschließend wurden in diese Dispersion 100 g Dynasilan® 1189, das 20%ig in Methanol verdünnt war, zugetropft und der pH Wert mit 29 g HCl konstant auf pH 3 gehalten. Die Suspension wurde dann bei 70°C 30 Minuten weitergeschert.

Vermahlung der Vordispersion

Die Vermahlung wurde in einer Rührwerkskugelmühle vom Typ LS 1 der Firma Netzsch-Condux durchgeführt. Dazu wurde die Dispersion in einem auf 60 °C beheizten Behälter vorgelegt und durch eine Pumpe in den Mahlraum der Mühle gepumpt, aus dem sie wieder in den selben Behälter zurück floss. Die Suspension wurde also in Kreislauffahrweise vermahlen. Nach Einbringung einer Mahlenergie, die durch die Stromaufnahme des Mühlenantriebs bestimmt wurden, ist an einer Probe die mittlere Partikelgröße und die Partikelgrößenverteilung nach beschriebener Methode bestimmt worden. Nach 90 Minuten Mahlzeit wurde so ein mittlerer Partikeldurchmesser $d_{50}$ von 140 nm und ein $d_{90}$-Wert von 230 nm erreicht.

Anwendungstest

Aus der so erhaltene n(Roh-)disperion wurde eine Antikorrosiver Primer hergestellt, der in den Anwendungseigenschaften ein sehr gutes Ergebnis gezeigt hat.

**Patentansprüche**

**1.** Verfahren zur Herstellung von Dispersionen umfassend gefällte Kieselsäure, **dadurch gekennzeichnet, dass** es die Schritte

a) Herstellen einer Vordispersion aus zumindest einer gefällten Kieselsäure
und
b) Zuführung der Vordispersion zu einer Mahleinrichtung mit anschließender Vermahlung
umfasst, und
dass im Laufe des Verfahrens zumindest Teile der Oberfläche der gefällten Kieselsäurepartikel und / oder der während der Vermahlung neu erzeugten Oberfläche der gefällten Kieselsäurepartikel mit zumindest einem Aminosilan derart modifiziert werden, dass das Aminosilan kovalent an die gefällten Kieselsäurepartikel angebunden wird.

**2.** Verfahren nach Anspruch 1, **dadurch gekennzeichnet, dass** die Vordispersion einen Gehalt an anorganischen Salzen von 0,00015 bis 0,6 Gew. %, besonders bevorzugt 0,0015 bis 0,3 Gew. %, ganz besonders bevorzugt 0,0024 bis 0,09 Gew. % und speziell bevorzugt 0,0024 bis 0,03 Gew. %, jeweils bezogen auf das Gesamtgewicht der Vordispersion, aufweist.

**3.** Verfahren nach Anspruch 2, **dadurch gekennzeichnet, dass** das anorganische Salz ein mehrwertiges, vorzugsweise 2-oder 3-wertiges Anion umfasst.

**4.** Verfahren nach einem der Ansprüche 1 bis 3, **dadurch gekennzeichnet, dass** zur Herstellung der Vordispersion zumindest eine getrocknete Fällungskieselsäure und/oder zumindest ein Filterkuchen einer Fällungskieselsäure verwendet werden.

**5.** Verfahren nach einem der Ansprüche 1 bis 4, **dadurch gekennzeichnet, dass** der mittlere Partikeldurchmesser $d_{50}$ der in der Vordispersion vorliegenden Fällungskieselsäureteilchen größer als 100 nm, vorzugsweise 1 bis 500 $\mu$m beträgt.

**6.** Verfahren nach einem der Ansprüche 1 bis 5, **dadurch gekennzeichnet, dass** der Feststoffgehalt der Fällungskieselsäure in der Vordispersion bezogen auf das Gesamtgewicht der Vordispersion 5 bis 40 Gew. %, besonders bevorzugt 20 bis 40 Gew. % und ganz besonders bevorzugt 25 bis 35 Gew. % beträgt.

**7.** Verfahren nach einem der Ansprüche 1 bis 6, **dadurch gekennzeichnet, dass** zumindest ein Aminosilan vor und/ oder während und/oder nach der Vermahlung, d.h. Schritt b) zugegeben wird, bevorzugt dass zumindest ein Aminosilan während und/oder nach Schritt b) und / oder zur fertigen Vordispersion vor Schritt b) und / oder vor der Herstellung der Vordispersion und / oder während der Herstellung der Vordispersion zugegeben wird.

**8.** Verfahren nach einem der Ansprüche 1 bis 7, **dadurch gekennzeichnet, dass** der pH-Wert der Vordispersion und/ oder der Dispersion und / oder der Aminosilanlösung auf einen Wert kleiner 7, bevorzugt zwischen 2 und 6 eingestellt wird bevor und/oder während und/oder nachdem die Aminosilanlösung zur Vordispersion oder Dispersion zugegeben wird.

**9.** Verfahren nach einem der Ansprüche 1 bis 8, **dadurch gekennzeichnet, dass** ein Aminosilan mit der allgemeinen Formel $R_aSiX_{(4-a)}$, worin die Reste X gleich oder verschieden sind und hydrolysierbare Gruppen oder Hydroxygruppen bedeuten, die Reste R gleich oder verschieden sind und nicht hydrolysierbare Gruppen darstellen, wobei mindestens ein Rest R mindestens eine Aminogruppe umfasst, und a den Wert 1, 2 oder 3, bevorzugt 1 oder 2, hat, verwendet wird.

**10.** Dispersionen aus gefällter Kieselsäure, **dadurch gekennzeichnet, dass**

a) zumindest ein Aminosilan an zumindest einigen Stellen der Oberfläche der Fällungskieselsäurepartikel kovalent gebunden ist
b) der mittlere Durchmesser $d_{50}$ der oberflächenmodifizierten Fällungskieselsäurepartikel zwischen 50 und 500 nm vorzugsweise 80 bis 300 nm, besonders bevorzugt 100 bis 200 nm und ganz besonders bevorzugt 110 bis 160 nm und/oder der $d_{90}$-Wert der Partikelgrößenverteilungskurve der oberflächenmodifizierten Fällungskieselsäurepartikel zwischen 150 und 800 nm, bevorzugt 150 bis 500 nm, besonders bevorzugt 150 bis 300 nm, ganz besonders bevorzugt 150 bis 250 nm, speziell bevorzugt 150 bis 200 nm und ganz speziell bevorzugt 150 bis weniger als 200 nm liegt
c) der Feststoffgehalt der Dispersion größer oder gleich 20 Gew. % beträgt
d) der pH-Wert der Dispersion kleiner gleich 5 beträgt.

**11.** Verwendung der erfindungsgemäßen Fällungskieselsäuredispersionen nach Anspruch 10 zur Herstellung von Papierstrichen, bevorzugt Papierstrichen für Inkjetpapier, besonders bevorzugt als Topcoat für glänzendes Inkjetpapier oder als antikorrosiver Primer für die Beschichtung von Stahlbauteilen, bevorzugt Stahlrohren.

Europäisches Patentamt

European Patent Office

Office européen des brevets

# EUROPÄISCHER RECHERCHENBERICHT

Nummer der Anmeldung

EP 10 19 7057

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | EP 1 894 888 A1 (BUEHLER PARTEC GMBH [DE]) 5. März 2008 (2008-03-05) <br> * Absätze [0001], [0002], [0009] - [0017], [0020] - [0064] * <br> * Ansprüche * <br> ----- | 1-11 | INV. <br> C01B33/141 <br> C09C1/30 <br> C01B33/193 |
| X | US 2008/069753 A1 (FLOESS JOACHIM K [US] ET AL) 20. März 2008 (2008-03-20) <br> * Absätze [0002], [0005] - [0006], [0009] - [0021], [0028] - [0033], [0055], [0056] * <br> ----- | 1-11 | |
| X | US 2005/020699 A1 (ISOBE YASUHIDE [JP] ET AL) 27. Januar 2005 (2005-01-27) <br> * Absätze [0001], [0007] - [0025], [0041], [0044], [0048] - [0057], [0070] - [0072], [0075], [0081], [0113] * <br> * Beispiel 5 * <br> ----- | 1-11 | |
| X | US 2004/034123 A1 (HOEFLER JOSEPH MICHAEL [US]) 19. Februar 2004 (2004-02-19) <br> * Absätze [0001], [0005] - [0008], [0011] - [0015], [0018] - [0039] * <br> ----- | 1-7,9 | RECHERCHIERTE SACHGEBIETE (IPC) |
| A | Evonik Degussa GmbH: "Product Information SIPERNAT (R) 310", <br> , <br> April 2008 (2008-04), Seiten 1-2, XP002636241, <br> Gefunden im Internet: URL:http://www.sipernat.com/sites/dc/Downl oadcenter/Evonik/Product/SIPERNAT/Produkti nformationen/PI%20SIPERNAT%20310%20%20us.p df <br> [gefunden am 2011-05-11] <br> * das ganze Dokument * <br> ----- <br> -/-- | 1-11 | C01B <br> C09C <br> C08K <br> B82Y <br> C09D <br> C23C |

Der vorliegende Recherchenbericht wurde für alle Patentansprüche erstellt

| Recherchenort | Abschlußdatum der Recherche | Prüfer |
|---|---|---|
| München | 11. Mai 2011 | Hartlieb, Ariane |

EPO FORM 1503 03.82 (P04C03)

| | Europäisches Patentamt |
|---|---|
| | European Patent Office |
| | Office européen des brevets |

**EUROPÄISCHER RECHERCHENBERICHT**

**Nummer der Anmeldung**

EP 10 19 7057

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | Evonik Degussa GmbH: "Product Information SIPERNAT (R) 304 N", , April 2008 (2008-04), Seiten 1-2, XP002636242, Gefunden im Internet: URL:http://www.sipernat.com/sites/dc/Downl oadcenter/Evonik/Product/SIPERNAT/Produkti nformationen/PI%20DSL%20Japan_SIPERNAT%203 04%20N%20%20us.pdf [gefunden am 2011-05-11] * das ganze Dokument * ----- | 1-11 | |
| A | US 2006/013971 A1 (CHEN TIENTEH [US] ET AL) 19. Januar 2006 (2006-01-19) * Absätze [0002], [0023] - [0025] * ----- | 1,7,11 | |
| | | | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| München | 11. Mai 2011 | Hartlieb, Ariane |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 10 19 7057

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-05-2011

| Im Recherchenbericht angeführtes Patentdokument | Datum der Veröffentlichung | Mitglied(er) der Patentfamilie | Datum der Veröffentlichung |
|---|---|---|---|
| EP 1894888 A1 | 05-03-2008 | DE 102007012578 A1<br>US 2008216709 A1 | 06-03-2008<br>11-09-2008 |
| US 2008069753 A1 | 20-03-2008 | EP 2066754 A2<br>JP 2010503604 T<br>WO 2008033506 A2 | 10-06-2009<br>04-02-2010<br>20-03-2008 |
| US 2005020699 A1 | 27-01-2005 | AU 2002357508 A1<br>CA 2471714 A1<br>CN 1608031 A<br>DE 10297614 T5<br>WO 03055799 A1<br>JP 4101178 B2<br>KR 20050025134 A | 15-07-2003<br>10-07-2003<br>20-04-2005<br>27-01-2005<br>10-07-2003<br>18-06-2008<br>11-03-2005 |
| US 2004034123 A1 | 19-02-2004 | KEINE | |
| US 2006013971 A1 | 19-01-2006 | CA 2442762 A1<br>DE 60310499 T2<br>EP 1413451 A1<br>JP 3958736 B2<br>JP 2004142467 A<br>US 2005147770 A1<br>US 2004081772 A1 | 25-04-2004<br>27-09-2007<br>28-04-2004<br>15-08-2007<br>20-05-2004<br>07-07-2005<br>29-04-2004 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP OS09142827 B
- JP 0914287 A
- EP 0368722 A
- EP 0329509 A
- EP 0886628 A
- EP 0435936 A
- DE 102006049526
- DE 10033054 A
- US 6777039 A
- US 6417264 A

- US 6420039 A
- EP 1894888 A1
- EP 1894888 A
- EP 0716127 A
- EP 0716128 A
- EP 0846717 A
- EP 1101787 A
- DE 102007040802 A
- DE 102009001966

**In der Beschreibung aufgeführte Nicht-Patentliteratur**

- Ullmann's Encycplopedia of Industrial Chemistry. vol. A23, 642-647
- Ullmann's Encycplopedia of Industrial Chemistry. vol. A23, 629-635
- Ullmann's Encycplopedia of Industrial Chemistry. vol. A23, 635-642

- Sipernat - Performance Silica. Produktbroschüre. Firma Degussa AG, November 2003
- **W. NOLL.** Chemie und Technologie der Silicone. Verlag Chemie GmbH, 1968